# EUROPEAN PATENT APPLICATION

(11) **EP 4 491 440 A1**
(43) Date of publication of application: **15.01.2025**
(21) Application number: 23184562.9
(22) Date of filing: 10.07.2023
(51) Int. Cl.: B60L 53/18, B60L 53/302

(54) **A CHARGING ARRANGEMENT FOR SUPPLYING ELECTRICAL ENERGY TO AN ELECTRICAL VEHICLE**

(71) Applicant: ABB E-mobility B.V., 2629 JG Delft (NL)
(72) Inventor: Herdzina, Maciej, Krakow (PL); Blaszczyk, Pawel, Wieliczka (PL)
(74) Representative: Wroblewski, Marcin Jan

(57) **Abstract**

A charging arrangement (1) for supplying electrical energy to an electrical vehicle comprising a charging arm (2), and a charging cable (3), wherein a first end of the charging arm (2) is connected to a second end of the charging cable (3) and a first end of the charging cable (3) is equipped with a charging plug (4), wherein the charging cable (3) and/or the charging plug (4) is liquid-cooled, and wherein the charging arm (2) comprises at least two busbars (5) for supplying DC currents to an electrical vehicle and a protective earth busbar (6) for protecting against electric shocks. The charging arrangement (1) comprises further a charging unit (7), and a second end of the charging arm (2) is rotatably connected to the charging unit (7) thereby allowing a movement of the first end of the charging arm (2) relative to a vertical rotation axis (x).

## Description

### Technical field

The present invention relates to a charging arrangement for supplying electrical energy to an electrical vehicle, in particular an electrical car, an electrical bus, an electrical truck or a formula E vehicle.

### Background of the invention

From US patent application US20130076902A1 there is known a robotic charging station for charging a battery of an electric vehicle including a base plate, a riser coupled with the base plate and extending substantially transverse to the base plate, and a robotic arm. The robotic arm extends from the riser and supports an end effector. The end effector includes a plurality of electrical contacts configured to couple with a receptacle disposed on the electric vehicle. The robotic arm is configured to move the end effector in three degrees of motion.

From PCT patent application WO2021224708A1 there is known a charging device for autonomously charging an electric vehicle. Said charging device comprises a main body, which is controllably moveable in at least one of a rotational, vertical, or lateral direction; an arm coupled to the main body, which is controllably extendable and retractable in a longitudinal direction and a charging plug at a distal end of the arm. The arm can have a form of a rigid chain and the charging plug is configured to be controllably moveable and insertable into a charging portal of the electric vehicle.

From PCT patent application WO2021170370A1 there is known a charging system for charging an electric vehicle with electric energy. The charging system comprises a charging arm having a vertical charging arm part and a horizontal charging arm part. Further, charging system comprises a charging cable or a bus bar, which can be connected to the electric vehicle to be charged. The horizontal charging arm part having a deployable rigid chain, using which a vehicle-side end of the charging cable or the bus bar can be moved towards the electric vehicle.

Japanese patent application JP2011163045A discloses a garage for charging an electric vehicle with electric power from an external power source. The garage includes a parking space for the electric vehicle, a pair of pillars arranged at both ends of at least one side of the electric vehicle in the front-rear direction in the parking space, a frame arranged to connect between the pair of pillars, a charger for supplying electric power to a battery of the electric vehicle. The frame includes a busbar connected with the charger by a cable. The busbar may be configured to be connected to a household outlet instead of charger. The busbar is further connected to a power supply arm having a cable and a charging connector. Said cable is wound around a reel drum provided in the power supply arm.

European patent application EP3708412A1 discloses a force assisted charging arrangement for supplying electrical energy to an electrical vehicle. The force assisted charging arrangement comprises a first set of bus bars, a second set of bus bars, a charging cable and charging connector. The first set of bus bars is arranged distant and fixed in respect to ground. A first end of the second set of bus bars is connected rotatable to the first set of bus bars thereby allowing a rotation of its second end around a vertical rotation axis. In turn, a first end of the charging cable is connected to a charging connector and a second end of the charging cable is connected to a second end of the second set of bus bars. The charging cable and charging connector are cooled with the usage of liquid.

The use of charging arrangements for supplying electrical energy to an electrical vehicle is associated with the problem of heating charging cables and/or charging plugs, which require cooling using dedicated cooling devices. The heating of charging cables is usually caused by their long lengths. To prevent this, their cross sections are increased, which increases their weight and imposes the need to use cooling devices of large sizes and high powers, which generate high noise levels. Increased cable weight and high noise levels significantly reduce the comfort of using of said arrangements.

Therefore, the object of the invention is to provide a charging arrangement for supplying electrical energy to an electrical vehicle that provides possibility of use of cooling devices of smaller powers, efficiency and sizes that are quieter than commonly used cooling devices.

### The Essence of the Invention

The object of the invention is a charging arrangement for supplying electrical energy to an electrical vehicle comprising a charging arm, and a charging cable, wherein a first end of the charging arm is connected to a first end of the charging cable and a second end of the charging cable is equipped with a charging plug, wherein the charging cable and/or the charging plug is liquid-cooled, and wherein the charging arm comprises at least two busbars for supplying DC current to an electrical vehicle and a protective earth busbar for protecting against electric shocks. The essence of the invention is that the charging arrangement comprises further a charging unit, and a second end of the charging arm is rotatably connected to the charging unit thereby allowing a movement of the first end of the charging arm relative to a vertical rotation axis (x).

The application of the charging unit and the rotatory connection of the second end of the charging arm and the charging unit allowing a movement of the first end of the charging arm relative to a vertical rotation axis (x) provides possibility of use of cooling devices of smaller powers, efficiency and sizes that are quieter than commonly used cooling devices. It also leads to reduction in the amount of liquid used for such cooling. Consequently, it leads to increase of the comfort of use of such charging arrangements. This is due to the fact that said application of the charging unit and the rotatory connection of the second end of the charging arm and the charging unit in the charging arrangement ensures shortening of the charging cable and reduction of power losses over a path of an electric current transmission compared to the solution known from the state of the art. That, a as a consequence, leads to reduction in heating of the charging cable.

Further, the application of the liquid-cooled charging cable and/or the charging plug ensures a reduction of charging times of an electric vehicle.

Preferably, the charging arrangement comprises communication and signal wires that run through the charging arm and the charging cable and are connected to the charging plug.

The application of the communication and signal wires that run through the charging arm and the charging cable and are connected to the charging plug ensures automatic start of a charging process of an electrical vehicle, its control and termination.

Preferably, the charging cable and/or the charging plug is liquid-cooled with the use of cooling conduits.

Preferably, the busbars are made of copper or aluminum.

Preferably, the busbars of the charging arm are isolated.

Preferably, the busbars for supplying DC currents are dimensioned for supplying DC currents up to 3000A at a DC voltage of 1500V.

Preferably, the charging arm extends in a horizontal direction.

The application of the charging arm that extends in a horizontal direction eliminates the need of a user of the disclosed charging arrangement to lift the charging cable from the ground to connect said charging cable to a charging input of an electrical vehicle. This completely prevents the user from lifting and carrying such cable.

Further, the application of the charging arm that extends in a horizontal direction prevents the charging plug from hitting the ground and as a result prevents from mechanical damage to the charging plug. Thus the charging arrangement according to the invention is more reliable compared to the solutions known from the prior art.

Preferably, the range of the movement of the first end of the charging arm relative to the vertical rotation axis (x) is up to 300°.

Preferably, the range of the movement of the first end of the charging arm relative to the vertical rotation axis (x) is 270°.

The application of the range of the movement of the first end of the charging arm relative to the vertical rotation axis (x) of up to 300°, in particular of 270°, ensures easy movement of the charging cable to a charging position of an electrical vehicle as the charging cable, together with the charging arm, moves relative to the charging unit. This ensures the capability to support several charging positions, in particular, from 2 to 4 charging positions.

Preferably, the charging arm and the charging unit are connected by a rotary joint.

The application of the rotary joint to connect the charging arm and the charging unit provides a simple and safe connection of the aforementioned elements.

Preferably, the rotary joint is fixed to the top of the charging unit.

Preferably, the connection of the first end of the charging arm with the first end of the charging cable is watertight and dustproof connection.

Preferably, the watertight and dustproof connection is made with the use of a cable gland.

Preferably, wherein the charging unit is configured for connecting to an AC grid, a DC grid or a DC power supply.

The object of the invention is also a charging station comprising at least one charging arrangement as above-disclosed.

### Advantages of the invention

The charging arrangement according to the invention makes it possible to transmit DC currents of large values without generating large voltage drops, and therefore without generating large power losses while simplifying a construction of the charging arrangement. It constitutes a consequence of the application of a charging unit and a rotatory connection of a second end of the charging arm and the charging unit.

The charging arrangement according to the invention ensures a reduction of power losses compared to the solutions known from the prior art.

The charging arrangement according to the invention increases further the comfort of its use, as a user of the disclosed charging arrangement no longer has to lift and carry charging cables characterized by high weight due to their large cross-sections.

The charging arrangement according to the invention provides higher flexibility of its usage compared to the solutions known from the prior art as a charging arm and a charging cable connected to it have a large range of movement due to a rotary connection of said arm and a charging unit.

The charging arrangement according to the invention is ergonomic as the arrangement is designed such that a charging cable hangs down from a charging arm.

The charging arrangement according to the invention eliminates the need to use a cable retraction system.

### Description of the drawings

The subject of the invention is shown in the embodiments in a drawing, in which:

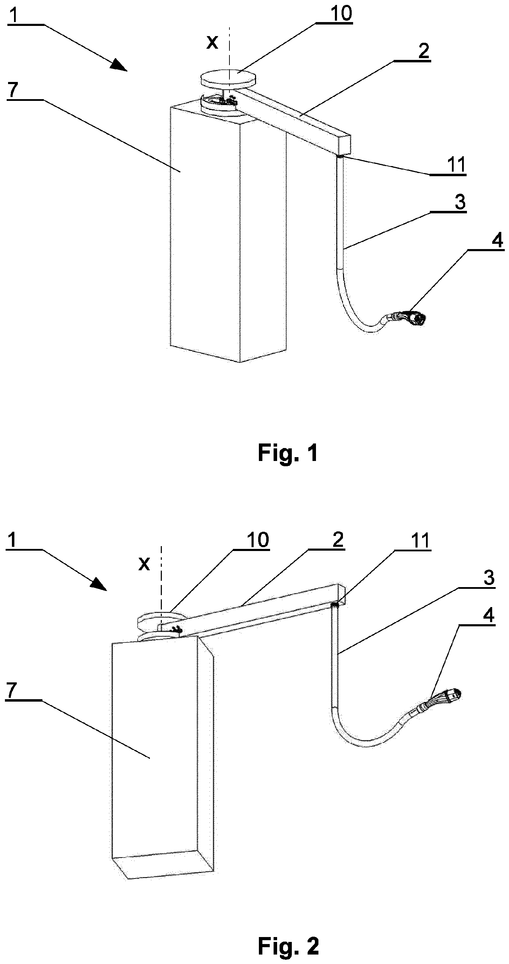

- Fig. 1: presents a charging arrangement for supplying electrical energy to an electrical vehicle according to the invention in a top perspective view with an exposed connection of its charging unit and a charging arm,
- Fig. 2: presents a charging arrangement for supplying electrical energy to an electrical vehicle according to the invention in a bottom perspective view with an exposed connection of its charging unit and a charging arm,

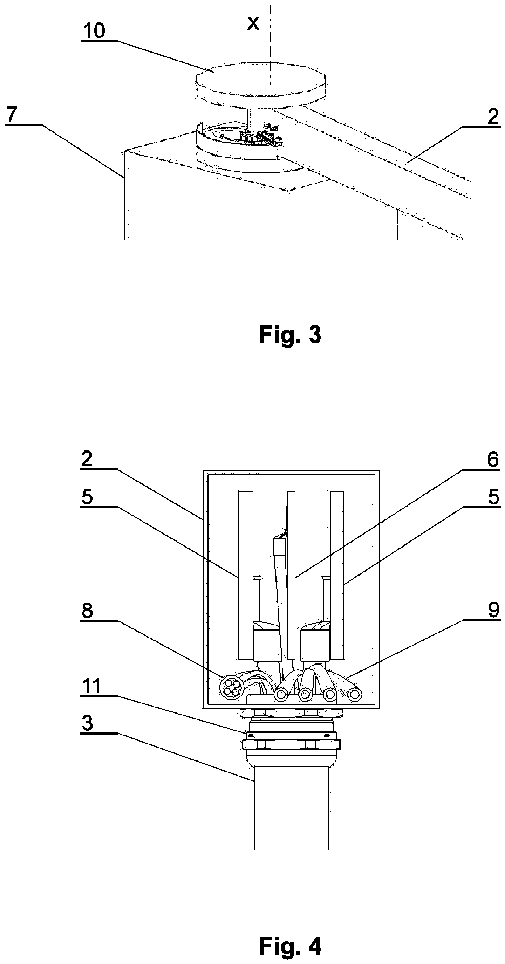

- Fig. 3: presents an exposed connection of a charging unit and a charging arm of a charging arrangement according to the invention in a perspective view,
- Fig. 4: presents a charging arm with visible busbars connected to a charging cable of a charging arrangement according to the invention in a front view,

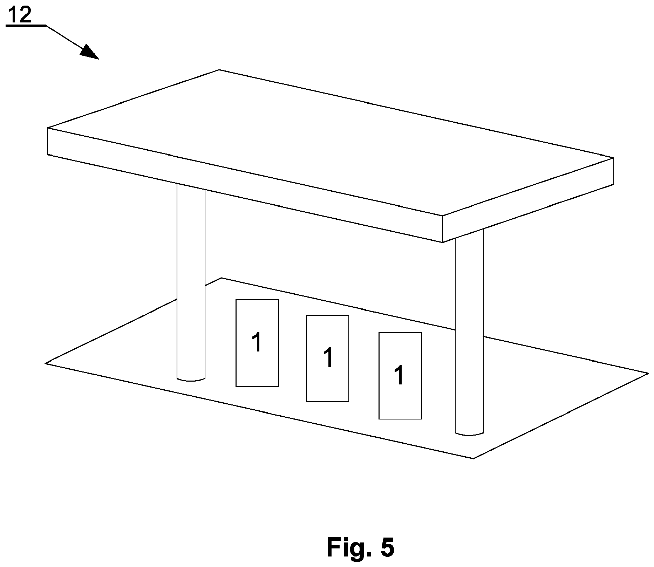

- Fig. 5: presents schematically a charging station according to the invention in a perspective view.

### Detailed description of the invention

### A charging arrangement for supplying electrical energy to an electrical vehicle

A charging arrangement 1 for supplying electrical energy to an electrical vehicle comprises a charging arm 2 and a charging cable 3. A first end of the charging arm 2 is connected to a first end of the charging cable 3 and a second end of the charging cable 3 is equipped with a charging plug 4. The connection of the first end of the charging arm 2 with the first end of the charging cable 3 is watertight and dustproof connection. The watertight and dustproof connection is made with the use of a cable gland 10.

The charging cable 3 and the charging plug 4 are liquid-cooled with the use of cooling conduits 9. The cooling conduits 9 have a form of pipes made of a thermally conductive material and cooling liquid is for example an oil-based liquid. The application of the liquid-cooled charging cable 3 and the charging plug 4, in particular with the use of cooling conduits 9, ensures a reduction of charging times of an electric vehicle.

The charging arm 2 comprises busbars 5 for supplying DC currents to an electrical vehicle and a protective earth busbar 6 for protecting against electric shocks. The busbars 5 for supplying DC currents, for example, can be dimensioned for supplying DC currents of 1500A at a DC voltage of 1500V. In such case, the cross-section of said busbars 5 is 1000 mm² (100 x 10 mm). Further, the charging arrangement 1 comprises communication and signal wires 8 that run through the charging arm 2 and the charging cable 3 and are connected to the charging plug 4. The application of the communication and signal wires 8 that run through the charging arm 2 and the charging cable 3 and are connected to the charging plug 4 ensures automatic start of a charging process of an electrical vehicle, its control and termination. The busbars 5, 6 are made of copper. For example it can be oxygen-containing copper, which has a high electrical and thermal conductivity. In the other embodiments, the busbars 5, 6 are made of aluminum. The busbars 5 for supplying DC currents to an electrical vehicle are isolated from each other. Further, said busbars 5 are isolated from the protective earth busbar 6 as well as the communication and signal wires 8.

The charging arm 2 extends in a horizontal direction. The application of the charging arm 2 that extends in a horizontal direction eliminates the need of a user of the disclosed charging arrangement 1 to lift the charging cable 3 from the ground to connect said charging cable 3 to a charging input of an electrical vehicle. This completely prevents the user from lifting and carrying such cable. Further, the application of the charging arm 2 that extends in a horizontal direction prevents the charging plug 4 from hitting the ground and as a result prevents from mechanical damage to the charging plug 4. Thus the charging arrangement 1 according to the invention is more reliable compared to the solutions known from the prior art.

The charging arrangement 1 comprises further a charging unit 7 and a second end of the charging arm 2 is rotatably connected to the charging unit 7 thereby allowing a movement of the first end of the charging arm 2 relative to a vertical rotation axis (x).

The application of the charging unit 7 and the rotatory connection of the second end of the charging arm 2 and the charging unit 7 allowing a movement of the first end of the charging arm 2 relative to a vertical rotation axis (x) provides possibility of use of cooling devices of smaller powers, efficiency and sizes that are quieter than commonly used cooling devices. It also leads to reduction in the amount of liquid used for such cooling. Consequently, it leads to increase of the comfort of use of such charging arrangements. This is due to the fact that said application of the charging unit 7 and the rotatory connection of the second end of the charging arm 2 and the charging unit 7 in the charging arrangement 1 ensures shortening of the charging cable 3 and reduction of power losses over a path of an electric current transmission compared to the solution known from the state of the art. That, a as a consequence, leads to reduction in heating of the charging cable 3.

The range of the movement of the first end of the charging arm 2 relative to the vertical rotation axis (x) is up to 300°, in particular 270°. The application of the range of the movement of the first end of the charging arm 2 relative to the vertical rotation axis (x) of up to 300°, in particular of 270°, ensures easy movement of the charging cable 3 to a charging position of an electrical vehicle as the charging cable 3, together with the charging arm 2, moves relative to the charging unit 7. This ensures the capability to support several charging positions, in particular, from 2 to 4 charging positions.

The charging unit 7 is configured for connecting to an AC grid. The charging unit 5 can be connected via a transformer and a converter to an AC grid. In the other embodiments, the charging unit 7 can be configured for connecting to a DC grid. In yet another embodiments the charging unit 7 can be configured for connecting to a DC power supply.

Furthermore, the charging arm 2 and the charging unit 7 are connected by a rotary joint 10. The rotary joint 10 is fixed to the top of the charging unit 7. The application of the rotary joint 10 to connect the charging arm 2 and the charging unit 7 provides a simple and safe connection of the aforementioned elements.

### A charging station

A charging station 12 comprising charging arrangements 1 as above-disclosed.

### List of references

- 1 -: charging arrangement
- 2 -: charging arm
- 3 -: charging cable
- 4 -: charging plug
- 5 -: busbars for supplying DC currents to an electrical vehicle
- 6-: protective earth busbar for protecting against electric shocks
- 7 -: charging unit
- 8 -: communication and signal wires
- 9 -: cooling conduits
- 10 -: rotary joint
- 11 -: cable gland
- 12 -: charging station

## Claims

1. A charging arrangement (1) for supplying electrical energy to an electrical vehicle comprising:
- a charging arm (2), and
- a charging cable (3),
wherein a first end of the charging arm (2) is connected to a first end of the charging cable (3) and a second end of the charging cable (3) is equipped with a charging plug (4),
wherein the charging cable (3) and/or the charging plug (4) is liquid-cooled, and
wherein the charging arm (2) comprises at least two busbars (5) for supplying DC currents to an electrical vehicle and a protective earth busbar (6) for protecting against electric shocks,
**characterized in that**
- the charging arrangement (1) comprises further a charging unit (7), and
- a second end of the charging arm (2) is rotatably connected to the charging unit (7) thereby allowing a movement of the first end of the charging arm (2) relative to a vertical rotation axis (x).

2. The charging arrangement according to claim 1, wherein the charging arrangement (1) comprises communication and signal wires (8) that run through the charging arm (2) and the charging cable (3) and are connected to the charging plug (4).

3. The charging arrangement according to claim 1 or 2, wherein the charging cable (3) and/or the charging plug (4) is liquid-cooled with the use of cooling conduits (9).

4. The charging arrangement according to any of the preceding claims, wherein the busbars (5, 6) are made of copper or aluminum.

5. The charging arrangement according to any of the preceding claims, wherein the busbars (5, 6) of the charging arm (2) are isolated.

6. The charging arrangement according to of the preceding claims, wherein the busbars (5) for supplying DC currents are dimensioned for supplying DC currents up to 3000 A at a DC voltage of 1500 V.

7. The charging arrangement according to any of the preceding claims, wherein the charging arm (2) extends in a horizontal direction.

8. The charging arrangement according to any of the preceding claims, wherein the range of the movement of the first end of the charging arm (2) relative to the vertical rotation axis (x) is up to 300°.

9. The charging arrangement according to claim 8, wherein the range of the movement of the first end of the charging arm (2) relative to the vertical rotation axis (x) is 270°.

10. The charging arrangement according to any of the preceding claims, wherein the charging arm (2) and the charging unit (7) are connected by a rotary joint (10).

11. The charging arrangement according to claim 10, wherein the rotary joint (10) is fixed to the top of the charging unit (7).

12. The charging arrangement according to any of the preceding claims, wherein the connection of the first end of the charging arm (2) with the fist end of the charging cable (3) is watertight and dustproof connection.

13. The charging arrangement according to claim 12, the watertight and dustproof connection is made with the use of a cable gland (11).

14. The charging arrangement according to any of the preceding claims, wherein the charging unit (7) is configured for connecting to an AC grid, a DC grid or a DC power supply.

15. A charging station (12) comprising at least one charging arrangement according to any of the claims from 1 to 14.
